Europäisches Patentamt

European Patent Office

Office européen des brevets

(11) Numéro de publication: **0 322 271**
**A1**

# (12) DEMANDE DE BREVET EUROPEEN

(21) Numéro de dépôt: **88403083.4**

(22) Date de dépôt: **06.12.88**

(51) Int. Cl.⁴: **E 04 F 15/12**
**B 05 D 5/06**
**// C04B40/00**

(30) Priorité: **07.12.87 FR 8717009**

(43) Date de publication de la demande:
**28.06.89 Bulletin 89/26**

(84) Etats contractants désignés:
**AT BE CH DE ES FR GB GR IT LI LU NL SE**

(71) Demandeur: **ETABLISSEMENTS BOULENGER**
**21, rue Pajol**
**F-75018 Paris (FR)**

(72) Inventeur: **Berlemont, Jacques**
**44, rue Keleinpeter**
**F-95270 Viarmes (FR)**

(74) Mandataire: **Lepeudry-Gautherat, Thérèse et al**
**ARMENGAUD JEUNE CABINET LEPEUDRY 6, rue du**
**Faubourg Saint Honoré**
**F-75008 Paris (FR)**

(54) **Nouveau revêtement de sol coulé présentant un décor incrusté dans la masse et procédé pour le préparer.**

(57) L'invention concerne un nouveau revêtement de sol coulé.

Selon l'invention, ce revêtement comporte au moins deux nuances d'une couleur différentes incrustées dans la masse et disposées de façon à former un décor.

Le procédé pour préparer ce décor comprend les étapes suivantes :

a) application d'une couche d'une première matière ayant une couleur donnée,

b) réalisation sur cette couche non encore polymérisée d'un motif en une deuxième matière ayant une couleur ou une nuance de couleur différente de celle de la première matière

c) polymérisation de l'ensemble autolissant obtenu.

Application aux revêtements de sol coulés en polyuré-thannes et en résines époxy.

EP 0 322 271 A1

Bundesdruckerei Berlin

## Description

**Nouveau revêtement de sol coulé présentant un décor incrusté dans la masse et procédé pour le préparer.**

La présente invention concerne un nouveau revêtement de sol coulé ainsi qu'un procédé pour le préparer.

Les revêtements de sol coulés sont connus depuis de nombreuses années. Les premiers revêtements de ce type, par exemple ceux décrits dans la demande de brevet n° 819 214 déposée en 1936, étaient réalisés à partir d'un mélange d'une émulsion aqueuse de caoutchouc naturel et de ciment, ce dernier durcissant par absorption de l'eau du latex, laquelle provoque la coagulation du caoutchouc. De nombreux autres revêtements ont été développés par la suite, notamment ceux contitués de particules de caoutchouc incorporées dans un liant résineux et ceux à base de polymères synthétiques, tels que les polyesters, en particulier les polyméthacrylates, les résines époxy et les polyuréthanes . Les revêtements de sol coulés à base de ces derniers existent depuis déjà au moins une vingtaine d'années.

Les revêtements de sol coulés contituent un succédané avantageux des revêtements de sol collés, en carreaux ou en rouleaux, dont ils suppriment les inconvénients. Ceux-là comportent en effet nécessairement des joints lorsqu'ils recouvrent une surface importante. Or ces derniers ont une mauvaise résistance aux produits lessiviels et ont donc tendance à se dégrader et perdre leur étanchéité. Après une période donnée d'utilisation, dont la durée dépend de la qualité des mastics constituant les joints, l'eau et les détergents s'infiltrent sous le revêtement, ce qui a pour effet de détacher progressivement ce dernier du sol. Il est donc nécessaire de recoller périodiquement celui-là à celui-ci. Cette infiltration d'eau à travers le revêtement laquelle favorise la prolifération microbienne, n'est pas admissible dans les locaux où des normes sévères d'hygiène doivent être respectées, tels que par exemple les crèches ou les hôpitaux. Elle n'est pas non plus acceptable sur des sols comportant une partie métallique, tels que ceux des ascenseurs ou des rames de métro, car le mélange d'eau et de détergents est susceptible de provoquer une corrosion importante de cette dernière. Les revêtements de sols coulés, par contre, ne présentent aucun de ces inconvénients. Ils recouvrent en effet le sol de façon continue et sont solidement accrochés à ce dernier car ils ont été polymérisés à même celui-ci. Ils restent donc étanches et en parfait état pendant de nombreuses années.

Malgré ces avantages les revêtements de sol coulés n'ont connu jusqu'à présent qu'une utilisation très limitée. En effet les procédés actuels pour les réaliser ne permettent que l'obtention d'un revêtement monocolore ou multicolore mosaïque avec une répartition statistique des couleurs, dans le cas de granulés de caoutchouc de différentes couleurs incorporés dans un liant résineux. Cet aspect peu esthétique restreint l'emploi des revêtements de ce type. Ceux qui ont des revêtements à base de polyuréthanes , par exemple, ne sont pratiquement utilisés que dans les gymnases et autres installations sportives. Leur apparence monocolore est bien adaptée à la délimitation contrastée des surfaces de jeu. Mais dans les autres domaines et notamment dans l'industrie du bâtiment il est souhaitable de disposer d'un revêtement de sol d'aspect harmonieux et si possible inaltérable dans les conditions d'usure habituelles. Cette dernière caractéristique nécessite la décoration dans la masse du revêtement.

Or les techniques connues pour la fabrication de sols collés décorés dans la masse nécessitent un équipement lourd, comprenant par exemple des calandres, et sont donc inapplicables dans les conditions rustiques d'un chantier du bâtiment. La Demanderesse a donc été surprise de découvrir un nouveau revêtement de sol coulé décoré dans la masse obtenu selon un procédé mettant en oeuvre des moyens particulièrement simples et présentant des caractéristiques esthétiques comparables et même supérieures à celles des sols collés fabriqués en usine.

L'invention concerne donc un nouveau revêtement de sol coulé, caractérisé en ce qu'il est constitué :
- d'une première couche d'une matière (1) ayant une couleur donnée, et
- d'au moins un motif en une matière (2) ayant une couleur ou une nuance de couleur différente de celle de la matière (1), ladite matière (2) présentant une composition chimique et une viscosité telles, qu'après l'application de la matière (2) sur la matière (1), l'ensemble des deux matières s'autolissent. Cet "autolissage" est du à la réactivité des matières (1) et (2) ensemble.

De préférence, ces deux matières ont les mêmes compositions chimiques et les mêmes viscosités.

Bien sûr, plusieurs motifs fabriqués à partir de matières différentes de celle de la matière (1) par la couleur et / ou le ton de couleur peuvent également être prévus.

Les revêtements de l'invention sont formés de préférence de matières choisies parmi celles à base de polymères synthétiques. On apprécie que ces derniers soient des polyesters, notamment des méthacrylates et des acrylates, des polyuréthanes et des résines époxy.

Des résultats excellents ont été obtenus avec les polyuréthanes et les résines époxy.

Dans une forme de réalisation préférée de l'invention ce revêtement présente de plus les tons intermédiaires entre ces deux couleurs ou nuances d'une couleur différente, incrustés dans la masse.

Le procédé pour préparer le revêtement précédent comprend les étapes suivantes :
    a) application d'une couche d'une matière (1) ayant une couleur donnée ;
    b) réalisation sur cette couche non encore polymérisée d'au moins un motif en une matière (2) ayant une couleur ou une nuance de couleur différente de celle de la matière (1);
    c) polymérisation de l'ensemble obtenu.

La réalisation du motif de l'étape b) peut consister en la distribution de la matière (2) selon un dessin. La matière (2) s'incruste alors dans la couche de matière (1) en formant un motif, appelé ici "motif primaire", reproduisant les contours du dessin. Il est possible de choisir les colorants des matières (1) et (2), la vitesse de polymérisation ainsi qu'éventuellement un solvant de façon à provoquer une certaine migration des colorants entre l'étape b) et la fin de l'étape c). On obtient ainsi après polymérisation, un motif appelé ici "motif final", présentant des dégradés de couleurs à effet esthétique intéressant. Mais en l'absence de cette migration de colorant, cas habituel en l'absence de solvant et avec les vitesses de polymérisation et les colorants couramment utilisés, il est nécessaire de maîtriser de façon précise la distribution de la matière (2) selon le dessin choisi car le motif primaire a la forme du motif final.

Il est parfois difficile sur un chantier du bâtiment d'exécuter cette opération avec le soin requis. On préfère donc en général distribuer la matière (2) selon un dessin approximatif et répartir ensuite celle-ci de façon nuancée dans la couche de matière (1) à l'aide par exemple d'un moyen mécanique. Ce dernier doit alors provoquer le mélange partiel et inégal selon l''endroit de cette dernière avec la matière (1). Cette façon de procéder à l'avantage de permettre l'obtention d'un motif de décor présentant toute une série de tons intermédiaires. Les moyens mécaniques utilisables pour cette répartition nuancée sont facilement disponibles sur un chantier du bâtiment. Ils consistent par exemple en l'utilisation de pinceaux, de peignes, de rouleaux débulleurs comportant des pics fins et resserrés, de rouleaux de laine, de rouleaux à crépi ou d'air insufflé. Ces deux derniers moyens sont particulièrement appréciés dans le cas où la matière (1) n'est pas translucide. Les résultats esthétiques les plus proches des décors existant actuellement pour les revêtements de sol collés ont été obtenus avec un rouleau à crépi comportant des protubérances dans plusieurs directions. La hauteur de ces dernières est alors un des paramètres déterminant la profondeur de l'incrustation du motif dans la couche de matière (1). Pour une incrustation maximale on apprécie que cette hauteur soit voisine de ou légèrement supérieure à l'épaisseur de cette couche. L'épaisseur de répartition du filet de couleur de matière 2 est de l'ordre de 50 % aumoins dans la matière 1.

La quantité de matière (2) appliquée à l'étape b) est de préférence comprise en poids, entre 1 et 20 % de celle de la matière (1). Ces matières doivent bien sûr être compatibles chimiquement et si possible posséder la même résistance à l'usure en particulier l'abrasion, de façon à conférer au décor un caractère inaltérable. Une façon simple de remplir ces critères est le choix d'une matière (2) ayant une composition chimique voisine de celle de la matière (1). Il est d'autre part souhaitable que la matière (2) ait une densité voisine ou identique à celle de la matière(1). En effet, dans le cas contraire, le motif reste en surface de la couche (1) ou coule en grande partie dans la partie inférieure de celle-ci. Le décor n'a pas alors de caractère inaltérable.

Comme indiqué ci-dessus, il est préférable pour obtenir un bon autolissage, que les matières utilisées aient des caractéristiques de viscosité très proche ou identique quand le revêtement de sol est réalisé.

Les viscosités des matériaux qui ont été effectivement utilisés pour former les revêtements selon l'invention ont été mesurées au moyen du visiomètre d'Engler, montrant que l'écoulement est compris entre 800 s et 3500 s.

Certaines matières de revêtement de sol coulés, par exemple celles à base de polyuréthanes ou de résines époxy, forment en polymérisant une croûte superficielle brillante, laquelle n'est en général pas souhaitable esthétiquement. Celle-ci est en effet susceptible d'être rayée, les rayures étant alors manifestes, et d'autre part présente l'inconvénient de rendre visibles les irrégularités du revêtement telles que par exemple les petits orifices provoqués par des microbulles d'air incluses dans les matières (1) ou (2). Aussi préfère t-on le plus souvent effectuer un ponçage du revêtement de façon à faire disparaître cette croûte superficielle brillante.

Remarquons que cette dernière opération n'est jamais effectuée sur les revêtements de sol coulés monocolores de l'état de la technique. En effet certaines irrégularités du revêtement, en particulier celles provoquées par la sédimentation des charges, restent visibles après ponçage sur un revêtement monocolore. On préfère donc pulvériser une couche de protection non brillante, sur celui-ci. Dans le cas du revêtement de l'invention ces dernières sont difficilement perceptibles à l'oeil à cause de l'effet masquant du décor.

Dans le cas d'un revêtement de sol coulé à base de polyuréthanes , on préfère que la matière (1) et/ou la matière (2) soient obtenues par mélange d'une partie polyol. Par les revêtements à base de résines époxy on apprécie que la matière (1) et/ou la matière (2) soient obtenues par mélange d'une résine époxy et une polyamine ou un polyamide.

L'invention sera mieux comprise à l'aide de la description ci-après de deux modes de réalisation particulièrement appréciés de celle-là.

EXEMPLE 1 :
Réalisation d'un revêtement de sol coulé décoré en polyuréthan .

On applique sur la surface du sol à revêtir une première couche, dite "couche d'imprégnation", d'environ 0,3 mm d'épaisseur, en résine polyuréthane monocomposant. On la laisse reposer jusqu'à sa polymérisation complète, soit environ douze heures. Cette couche d'imprégnation est nécessaire avant de couler une résine polyuréthane bi-composant. Elle a pour fonction d'empêcher la remontée de l'humidité ou de l'air éventuels du sol pendant la période de polymérisation de cette résine.

On mélange ensuite par touillage dans un seau 1000 parties, en poids, d'une partie polyol appelée ici"composant $A_1$" et 220 parties, en poids d'une partie polyisocyanate appelée ici "composant B", ce qui correspond a un rapport molaire entre le groupe isocyanate NCO et le groupe hydroxy OG d'environ 1,1. Cet excès de groupes isocyanates est nécessaire compte tenu de l'humidité ambiante absorbée au cours des différentes opérations.

Le composant $A_1$ est constitué, en poids, de
- 455 parties d'un mélange de polyester, polyéthers et copolymères comportant des groupes hydroxy, le Desmophen ® 1150 commercialisé par la Société Bayer.
- 90 parties d'une pâte contenant un tamis moléculaire, la pâte Baylith L commercialisée par la Société Bayer,
- 392 parties de sulfate de baryte,
- 60 parties d'un mélange pâteaux de pigments, la pâte Isopurol de couleur jaune commercialisée par la Société BASF.

Le composant B est constitué d'un mélange de diisocyanates, triisocyanates et polyisocyanates, le Desmodur® VL, commercialisé par la Société Bayer.

On verse sur la couche d'imprégnation le mélange du composant $A_1$ et du composant B, appelé "matière 1" et on l'égalise à l'aide d'un peigne. Dans cet exemple de réalisation de l'invention la quantité des composants $A_1$ et B a été calculée pour l'obtention d'une couche d'environ 3,5 mm d'épaisseur de matière 1. On passe ensuite sur cette dernière un rouleau débulleur de façon à chasser l'air inclus au moment du mélange.

On mélange ensuite par touillage dans un récipient muni d'un bec verseur obturé par un bouchon perçable en thermoplastique et d'un couvercle dégrafable, 50 parties, en poids, d'une partie polyol appelée ici "composant $A_2$" et 11 parties du composant B. Le composant $A_2$ est constitué des mêmes éléments que le composant $A_1$, à la différence près du mélange pâteux de pigments. Celui-ci est en effet, pour le composant $A_2$, la pâte Isopurol de couleur rouge vif commercialisée par la Société BASF. On remarque que le mélange du composant $A_2$ et du composant B, appelé ici "matière 2", représente ici, en poids, 5 % de la matière 1.

On perce le bouchon du récipient contenant la matière 2 à l'aide d'un outil adapté, choisi ici pour faire un orifice d'environ 3 mm de diamètre, et on distribue cette dernière sur la couche de matière 1 selon un dessin. Celui-ci consiste en une série de lignes brisées d'axes de symétrie (approximative) à peu près parallèles et équidistants.

le mélange s'autolisse rapidement, le motif primaire rouge de matière 2 ne se distinguant du fond jaune de matière 1 que par cette différence de couleurs. On obtient donc une couche plane bicoloreà motif rouge et fond jaune.

On passe sur cette dernière un rouleau à crépi comportant des protubérances, dont les formes générales se rapprochent de celles d'étoiles à extrémités arrondies. La hauteur de ces protubérances est de 4 mm Lorsque le rouleau tourne il se produit un certain malaxage entre la matière 1 et la matière 2, lequel provoque le mélange partiel et inégal selon l'endroit de ces dernières, d'où l'apparition de toute une gamme de nuances de couleur, et en particulier d'orange de ton plus ou moins clair, intermédiaires entre le jaune et le rouge. Celles-ci sont disposées de façon harmonieuse. Le mélange s'autolisse rapidement après le passage du rouleau.

On obtient donc une couche plane à décor incrusté relativement éloigné du motif primaire et comprenant tout un ensemble de nuances de couleurs.

On laisse reposer cette dernière pendant douze heures, temps suffisant pour sa polymérisation. La couche de revêtement polymérisée possède un décor très proche , en ce qu'il concerne la répartition de couleurs, de précédent. Pour éliminer la croûte brillante qui s'est formée sur celle-là, on passe sur cette dernière une ponceuse rotative comportant des pales en caoutchouc et un disque abrasif souple à 120 grains par $cm^2$. On obtient ainsi un revêtement de sol coulé présentant un décor d'aspect comparable à ceux existant actuellement pour les revêtements de sol collés.

De façon générale l'invention permet l'harmonisation complète du revêtement de sol coulé avec le décor de la pièce dont il recouvre le sol. Cette harmonisation se fait en particulier par un choix judicieux de la couleur de la matière (1) et de celle de la matière (2) ainsi que du dessin de distribution de la matière (2) et du moyen pour la répartir. Les sols collés, fabriqués en série, n'offrent pas la même souplesse de décoration.

EXEMPLE 2 :
Réalisation d'un revêtement de sol coulé décoré en résine époxy.

On applique comme dans l'exemple précédent une couche d'imprégnation d'environ 0,4 mm d'épaisseur en résine époxy bi-composant colorée en blanc à l'aide d'oxyde de titane de couleur blanche. On la laisse reposer jusqu'à sa polymérisation complète soit environ douze heures.

On mélange ensuite par touillage dans un seau 100 parties, en poids d'une partie époxy appelée ici "composant $C_1$" et 600 parties d'une partie polyamide appelée ici "composant D". Le composant "$C_1$" est une résine époxy du type bisphénol A, le DER 324 commercialisé par la Société DOW et le composant D un polyamide, le Casimid 428 commercialisé par la Société Thomas SWANN.

On verse sur la couche d'imprégnation le mélange translucide obtenu, appelé "matière 1", et on égalise la couche étalée à l'aide d'un peigne. Dans cet exemple de réalisation de l'invention la quantité des composants $C_1$ et D a été calculée de façon à avoir une couche de matière d'environ 1,5 mm d'épaissseur. On passe sur cette dernière un rouleau débulleur de façon à chasser l'air inclus au moment du mélange.

On mélange ensuite par touillage dans un récipient muni d'un bec verseur obturé par un bouchon perçable en thermoplastique et d'un cercle dégrafable, 50 parties, en poids, d'une partie époxy appelée ici "composant "$C_2$" et 30 parties du composant D. Le composant $C_2$ a la même composition chimique que le composant $C_1$ à la différence près qu'il contient de plus 3 %, en poids, d'un mélange pâteux de pigments, la pâte Isopurol de couleur rouge vif commercialisée par la Société BASF. On remarquera que le mélange du composant $C_2$ et du composant D, appelé ici "matière 2" représente en poids 5 % de la matière $1^\gamma$.

On perce le bouchon du récipient contenant la matière 2' à l'aide d'un outil adapté choisi ici pour faire un orifice d'environ 5 mm de diamètre, et on distribue cette dernière sur la couche de matière 1' selon une série de taches disposées de façon aléatoire. Le mélange s'autolisse rapidement et donne une couche plane à motif rouge dans un milieu translucide sur fond blanc.

On passe sur la couche obtenue un pinceau afin de répartir ces taches suivant un motif harmonieux avec un dégradé de couleurs allant du rouge vif au translucide sur fond blanc. On laisse reposer le mélange pendant douze heures, temps suffisant pour sa polymérisation. On obtient ainsi après lustrage un revêtement de sol coulé présentant toute une gamme de nuances de couleurs allant du blanc translucide au rouge, incrustées dans la masse et disposées de façon esthétique.

Il est possible de réaliser sur cette première couche une deuxième couche de résine comportant un ensemble de nuances de couleurs allant par exemple du bleu foncé au blanc translucide. On obtient ainsi un revêtement de sol coulé à décor incrusté d'aspect insolite. Celui-ci comporte deux couches, la première comprenant un décor incrusté avec un dégradé de couleurs allant du rouge vif au translucide et la deuxième un décor incrusté avec un dégradé de couleurs allant du bleu foncé au translucide. Il n'y a pas de couleur violette, ces deux séries de tons de couleurs n'étant pas mélangées. Ce type de décor est particulièrement intéréssant pour les spectacles nocturnes comportant des effets de lumière.

Le procédé de l'invention permet donc la réalisation, à l'aide de moyens particulièrement simples et facilement disponibles sur un chantier du bâtiment, de revêtement disponiles de sol coulés présentant un décor incrusté intéressant esthétiquement.

## Revendications

1 - Revêtement de sol coulé, caractérisé en ce qu'il est constitué :
- d'une première couche d'une matière (1) ayant une couleur donnée et ,
- d'au moins un motif en une matière (2) ayant une couleur ou une nuance de couleur différente de celle de la matière (1), ladite matière (2) présentant une composition chimique et une viscosité telles, qu'après son application sur la matière (1), l'ensemble des deux matières s'autolisse.

2 - Revêtement selon la revendication 1 caractérisé en ce que les viscosités des deux matières (1) et (2) sont identiques.

3 - Revêtement selon la revendication 1, caractérisé en ce qu'il présente de plus des tons intermédiaires entre ces deux couleurs ou nuances d'une couleur différente, incrustés dans la masse.

4 - Revêtement selon la revendication 1, caractérisé en ce qu'il est formé d'une matière à base de polymères synthétiques.

5 - Revêtement selon la revendication 4 , caractérisé en ce que les polymères synthétiques appartiennent à l'ensemble des polyuréthanes , des polyesters et des résines époxy.

6 - Revêtement selon la revendication 5, caractérisé en ce que les polymères synthétiques sont des polyuréthanes .

7 - Revêtement selon la revendication 6, caractérisé en ce que les polymères synthétiques sont des résines époxy.

8 - Procédé de préparation d'un revêtement selon l'une quelconque des revendications 1 à 7, caractérisé en ce qu'il comprend les étapes suivantes :

    a) application d'une couche d'une matière (1) ayant une couleur donnée

    b) réalisation sur cette couche non encore polymérisée d'au moins un motif en une matière (2) ayant une couleur ou une nuance de couleur différente de celle de la matière (1).

    c) polymérisation de l'ensemble obtenu.

9 - Procédé selon la revendication 8, caractérisé en ce que la réalisation du motif est effectuée par distribution de la matière (2) selon un dessin et répartition nuancée de cette dernière.

10 - Procédé selon la revendication 1, caractérisé en ce que la répartition nuancée est réalisée à l'aide d'un moyen mécanique.

11 - Procédé selon la revendication 10, caractérisé en ce que le moyen mécanique comprend l'utilisation d'air insufflé ou d'un rouleau à crépi.

12 - Procédé selon la revendication 11, caractérisé en ce que le moyen mécanique comprend l'utilisation d'un rouleau à crépi présentant des protubérances de hauteur voisine de ou légèrement supérieure à l'épaisseur de la couche obtenue à l'issue de l'étape a).

13 - Procédé selon la revendication 8 caractérisé en ce que l'épaisseur de répartition de couleur de la matière (2) est de l'ordre de 50 % au moins dans la matière (1).

14 - Procédé selon la revendication 8, caractérisé en ce que postérieurement à l'étape c) on effectue un ponçage du revêtement polymérisé.

15 - Procédé selon la revendication 8, caractérisé en ce que la quantité de matière (2) est comprise, en poids, entre 1 et 20 % de celle de la matière (1).

16 - Procédé selon la revendication 8, caractérisé en ce que la densité de la matière (2) est voisine ou identique à celle de la matière (1).

17 - Procédé selon la revendication 8, caractérisé en ce que la matière (1) a une composition chimique voisine de celle de la matière (2).

18 - Procédé selon la revendication 8, caractérisé en ce que la matière (1) et/ou la matière (2) sont obtenues par mélange d'une partie polyisocyanate et une partie polyol.

19 - Procédé selon la revendication 8, caractérisé en ce que la matière (1) et/ou la matière (2) sont obtenues par mélange d'une résine époxy et une polyamine ou un polyamide.

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.4) |
|---|---|---|---|
| X | DE-A-2 423 661 (S.H. MÖCKEL)<br>* Page 3, lignes 15-17; revendications 1-3,8,9 *<br>--- | 1-12,14 ,17-19 | E 04 F 15/12<br>B 05 D 5/06 //<br>C 04 B 40/00 |
| A | US-A-3 071 487 (J.G. JENNE)<br>* Revendication 1 *<br>--- | 1,16 | |
| A | CH-A- 188 096 (E. DISSMANN)<br>* Revendications; page 1, colonne de gauche, ligne 22 - colonne de droite, ligne 2 *<br>--- | 1 | |
| A | GB-A- 956 128 (GENERAL/MILLS)<br>--- | | |
| A | CH-A- 536 199 (MARECHAL S.A.)<br>----- | 10,11 | |

DOMAINES TECHNIQUES
RECHERCHES (Int. Cl.4)

E 04 F 15
B 29 D 31
C 04 B 40
C 04 B 26
B 44 C 1
B 05 D 5

Le présent rapport a été établi pour toutes les revendications

| Lieu de la recherche | Date d'achèvement de la recherche | Examinateur |
|---|---|---|
| LA HAYE | 06-03-1989 | DAELEMAN P.C.A. |

EPO FORM 1503 03.82 (P0402)